# EUROPEAN PATENT SPECIFICATION

(11) **EP 2 831 471 B1**
(45) Date of publication and mention of the grant of the patent: **04.05.2016**
(21) Application number: 13717296.1
(22) Date of filing: 15.03.2013
(51) Int. Cl.: F16J 1/16, F16J 1/18, F16J 7/00

(54) **A PISTON PIN ASSEMBLY**
KOLBENBOLZENANORDNUNG
ENSEMBLE AXE DE PISTON

(30) Priority: 29.03.2012 FI 20125356
(43) Date of publication of application: 04.02.2015
(73) Proprietor: Wärtsilä Finland Oy, 65380 Vaasa (FI)
(72) Inventor: NYNÄS, Håkan, FI-65280 Vaasa (FI); TIRKKONEN, Esa, FI-00530 Helsinki (FI)
(74) Representative: Genip Oy
(86) International application number: PCT/FI2013/050302
(87) International publication number: WO 2013/144432

(56) References cited:
- EP-A2- 0 219 634
- US-A1- 2003 075 125
- US-A1- 2009 107 467

## Description

### Technical field

The present invention relates to internal combustion piston engines. Particularly, the present invention relates to adjusting compression ratio of the piston engine by means of a piston pin assembly, which piston pin assembly comprises a piston pin having at its first end and its second end a first and a second affixing area for attaching the piston pin to a piston, and between the first and the second ends, at a center area a third affixing area for attaching the piston pin assembly to a connecting rod, and in which piston pin assembly the first and the second ends having a common first central axis and the center area having a second central axis which axes are offset at a distance from each other.

### Background art

In internal combustion piston engines the reciprocating movement of the piston is transformed into a rotating movement of the crankshaft by connecting each piston via a connecting rod to the crankshaft. In a trunk piston engine the piston has been installed by a small end bearing to the connecting rod so that the connecting rod may rotate in relation to the piston. It is known in the art to attach a piston to a connecting rod by means of a floating piston pin. In this solution the piston pin has been arranged against the bearing surfaces of the connecting rod so that in operation it can rotate into any position. In other words only the movement of the pin in the longitudinal direction is limited. Another piston pin type is a locked pin. This kind of the piston pin is locked also for the rotating movement either to the piston or the connecting rod, thus it cannot rotate even during the running of the engine.

Attempts to accomplish dynamic i.e. on the fly variable compression ratio in an internal combustion piston engine have been made since long time ago. One of the most common ways of approach to this includes an effective lengthening and shortening of the connecting rod, which joins the reciprocating piston to a rotating crankshaft. Naturally this requires the use of locked pin. Some of the solutions are proposing an eccentric piston pin connection provided at the articulating joint between the small end of the connecting rod and the piston.

For example DE 19503425 discloses a piston engine in which the effective length of the connecting rod may be adjusted. A piston pin which joins the connecting rod to the piston is provided with an eccentric bushing. The eccentric bushing is provided with fixed stop discs at its ends, protruding axially over either sides of the small end of the connecting rod. There are stop notches arranged to the rim of the disks which together with a locking member may retain the bushing at two positions corresponding two effective lengths of the connecting rod.

GB 2454340 discloses a variable compression ratio piston and connecting rod assembly for an internal combustion engine which includes an eccentric bushing that carries a piston pin bushing and contains a journalled portion held in the rod bore of the connecting rod. The eccentric bushing can be selectively rotated between either of two rotary adjusted positions to effect a change in the height of the piston relative to the connecting rod and thus change the compression ratio of the assembly.

EP 0219634, which constitutes the closest prior art, describes compression ratio changing device for an internal combustion engine using an eccentric bearing interposed between a piston pin and a connecting rod. A lock hole is formed in the eccentric bearing and a lock pin hole is formed in the connecting rod. A lock pin is slidably inserted in the lock pin hole and it may move into or out of the lock hole in the eccentric bearing. When the lock pin engages lock hole, the rotation of the eccentric bearing is locked. When the lock pin moves apart from the lock hole, the rotation of the eccentric bearing becomes free. To obtain a smooth entry of the lock-pin into the lock hole, a guide groove is formed in the outer portion of the eccentric bearing.

The solutions described are practically substantially complex or have shortcomings in respect to their operation.

It is an object of the invention to provide which provides simple and reliable construction and well controllable operation.

### Disclosure of the Invention

The objects of the invention are substantially met by a piston pin assembly for an internal combustion piston engine, which piston pin assembly comprises a piston pin having at its first end and its second end a first and a second affixing area for attaching the piston pin to a piston and between the first and the second ends, at a center area, a third affixing area for attaching the piston pin assembly to a connecting rod, and in which piston pin assembly the first and the second end having a common first central axis and the center area having a second central axis which axes are offset at a distance from each other. It is characteristic to the invention the assembly comprises: a power transmission system engageable to a connecting rod to receive work from rotational movement of the connecting rod in respect to a piston while installed to an engine and the engine is cranked or operated; a locking system which selectively locks or unlocks the rotational movement of at least the third area of the piston pin in respect to the piston.

According to an embodiment of the invention the offset between the first and the second axes is arranged by means of a rotatable eccentric sleeve arranged around, and belonging to, the piston pin at the center area thereof.

According to an embodiment of the invention the change in the position of the second axis in respect to the first axis is arranged to take place by rotational movement of the connecting rod in respect the piston.

According to an embodiment of the invention the offset between the first and the second axes is arranged by means of a rotatable eccentric sleeve arranged around the piston pin at the center area.

According to an embodiment of the invention the assembly further comprises a coupling system between the clutch system and the locking system synchronizing the operation the clutch system and the locking system so that when the clutch system engages the power transmission system to the piston pin, the locking system unlocks the rotational movement of the piston pin in respect to the piston, and vice versa.

According to an embodiment of the invention the power transmission system comprises a circular gear rim at the end of the piston pin having its central axis coinciding with the first central axis, the gear rim being engageable to a connecting rod to receive work from rotational movement of the connecting rod.

According to an embodiment of the invention the power transmission system comprises a circular gear rim circumscribing the piston pin, the gear rim being engageable to a connecting rod to receive work from rotational movement of the connecting rod.

According to an embodiment of the invention the assembly comprises the power transmission system and the locking system at the first end of the piston pin.

According to an embodiment of the invention the gear rim is selectively engageable by the clutch system to the piston pin, and that the gear rim is in force transmission with the connecting rod by a pawl device that makes the gear rim rotate in only one direction.

According to an embodiment of the invention the power transmission system comprises a circular gear rim at the end of the piston pin having its central axis coinciding with the first central axis, the gear rim being engageable to a connecting rod to receive work from rotational movement of the connecting rod and the locking means comprises a stem having a first longitudinal section of circular shape and a second longitudinal section of a shape deviating from circular form arranged in to a hole in the piston pin and a locking member attached to the piston body and having a hole of said shape deviating from circular form so that the second longitudinal section of the stem may fit into the hole, and that the hole in piston pin is at its edge area also of said shape deviating from circular form so that the second longitudinal section may fit into the hole.

According to an embodiment of the invention the assembly further comprises a coupling system between the clutch system and the locking system synchronizing the operation the clutch system and the locking system so that when the clutch system engages the power transmission system to the piston pin, the locking system unlocks the rotational movement of the piston pin in respect to the piston, and vice versa, where the coupling system comprises a stem mechanically connecting the power transmission system and the locking system means.

According to an embodiment of the invention the rotating system is arranged inside the piston at a space between the connecting rod and the piston body.

According to a further embodiment of the invention the power transmission system comprises a circular gear rim circumscribing the piston pin, the gear rim being engageable to a connecting rod to receive work from rotational movement of the connecting rod. Further, the gear rim is provided with gear teeth meshing with the pawl device at its outer rim, and notches at its inner rim co-operating with the clutch system, and the clutch system comprises a bar member arranged longitudinally movably in a groove arranged to the outer surface of the piston pin, the bar being fitted radially within the groove except at its end portion where the bar is provided with a radially projecting part conforming with the shape of the notches in inner rim of the gear rim.

According to an embodiment of the invention a piston suitable to be used in connection with the piston pin assembly comprises at least one slot in the supporting surface of the piston pin conforming to the shape of the radially projecting part, when assembled there to.

According to an embodiment of the invention the gear rim is arranged longitudinally movably and rotationally fixed to the piston pin; and that the gear rim is provided with driving gear at its side to-wards the connecting rod and that the gear rim is provided with locking projection(s) at its side opposite to the connecting rod, and that the gear rim is arranged to operate as the clutch system by its longitudinal positions against the connection rod having meshing surface with the driving gear, and against the inner surface of the piston having meshing surface with the locking projection(s).

According to another embodiment of the invention the gear rim is arranged longitudinally movably and rotationally fixed by means of spline surfaces arranged to the piston pin and the gear rim.

The present invention is particularly suitable in optimising the performance of a dual fuel engine for operation with both gas and liquid fuels. By means for the invention it is possible to set the compression ratio suitably for liquid fuel and when, during the operation of the engine, changing to gas operated mode set the compression ratio to second setting in order to cope with knocking limit of gaseous fuel.

The present invention is suitable for changing compression ration during the operation of the engine in general.

### Brief Description of Drawings

In the following, the invention will be described with reference to the accompanying exemplary, schematic drawings, in which
Figure 1 illustrates a piston pin assembly according to an embodiment of the invention,
Figure 2 illustrates the piston pin assembly of figure 1 at different setting,
Figure 3 illustrates a side view of the pin assembly of Figure 1,
Figure 4 illustrates another side view of the pin assembly of Figure 1,
Figure 5 illustrates a piston pin assembly according another embodiment of the invention,
Figure 6 illustrates a detail of the piston pin of Figure 5,
Figure 7 illustrates a piston pin assembly according another embodiment of the invention, and
Figure 8 illustrates details of the piston pin of Figure 7.

### Detailed Description of Drawings

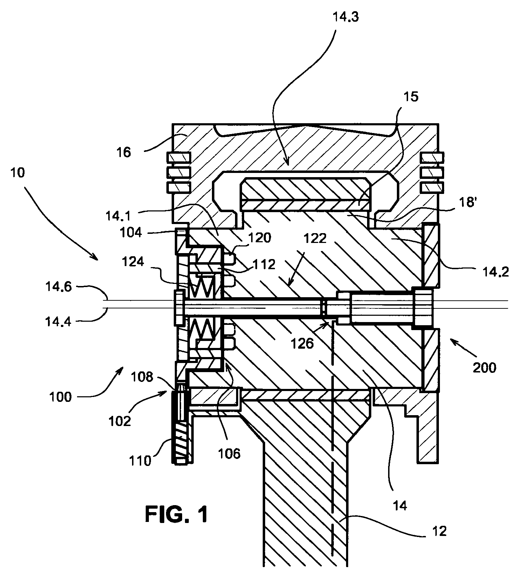

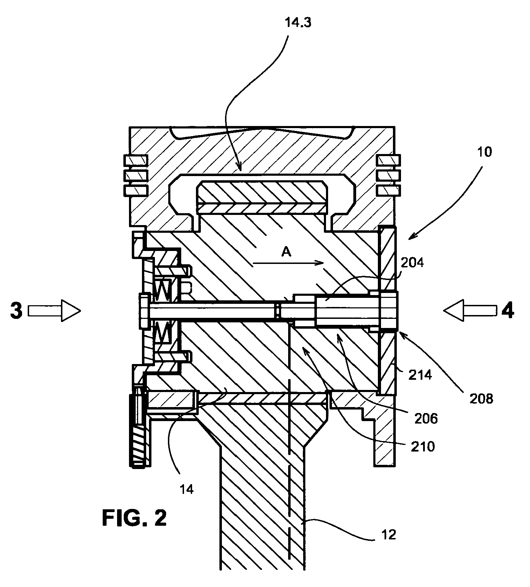

In figures 1 and 2 and the side views 3 and 4 there are schematically shown a piston pin assembly 10 according to an embodiment of the invention. The piston pin assembly provides variable compression ratio operation for the piston engine comprising such piston pin assembly.

The assembly is arranged in connection with a connecting rod 12, the connecting rod being connected at its big end to a crank shaft of an internal combustion engine (not shown). The assembly comprises a piston pin 14 which is journaled to the small end of the connecting rod. The piston pin is provided with a bearing 15 surrounding it. The piston pin connects the piston 16 to the connecting rod 12.

The piston pin 14 has at its first end 14.1 and its second end 14.2 a first and a second affixing area for attaching the piston pin to a piston 16 and between the first and the second ends, at a center area 14.3, a third affixing area for attaching the piston pin assembly 10 to the connecting rod 12. The first and the second ends have a common first central axis 14.4. The center area 14.3 is eccentric to the first and the second ends, in other words the center area has a second central axis 14.6 which is offset at a distance from the first central axis 14.4.

In the embodiment shown in figures 1 and 2 the offset between the first and the second axes is arranged by means of an eccentric outer surface 18' of the center area 14.3.

At the first end 14.1 of the gugdeon pin 14 there is arranged a rotating system 100 for the piston pin assembly. Respectively, there is a locking system 200 arranged at the second end 14.2 of the piston pin opposite to the first end. The rotating system 100 comprises a power transmission system 102 engageable to the connecting rod 12 to receive work from rotational movement of the connecting rod in respect to the piston while the engine is operated. Such a work may also be provided by cranking the engine without starting it.

The power transmission system 102 of the rotating system comprises a gear rim 104 rotatably and coaxially with the first end of the piston pin, bearing-mounted at the first end of the piston pin. The gear rim, generally the power transmission system, is selectively engageable by a clutch system 106 to the piston pin 14. The clutch is arranged in connection with the gear rim so that it can mechanically couple the gear rim to the piston pin. The power transmission system 102 comprises also a pawl device 108 that fits into notches of the gear rim forming a ratchet to rotate the gear rim in first direction and prevent it from rotating backward. Thus when the clutch is engaged the gear rim is in force transmission with the piston pin and the pawl device rotates the gear rim in respect to the piston due to the relative movement of the piston and the piston pin. The pawl device is according to the embodiment of figure 1 and 2 a pin-like member being pushed against the gear ring by a spring 110.

The clutch system comprises at least one pin 112 which is directed parallel with the first central axes 14.4 at a distance from the first central axis. The at least one pin is arranged movably in the direction of the central axis through a hole arranged to the gear rim. There is at least one cavity 120 arranged to the end face of the piston pin at a same radial location in respect to the first central axis as said pin 112. This way, when the pin and the cavity are rotationally at same position the pin 112 may be moved into the cavity which couples mechanically the gear ring and the piston pin with each other and the clutch system connects the power transmission system to the piston pin. The pin 112 and the respective cavity 120 represent an example of suitable form locking of the clutch system which may also be of different form.

Additionally the arrangement comprises a coupling system 122 between the clutch system 106 and the locking system 200 synchronizing the operation thereof. The coupling system 112 is mechanically coupled to said at least one pin 112. Thus, when the clutch system connects the power transmission system to the piston pin by a movement in the direction of the central axis the coupling system transmits the movement to the locking means, which the locking means, based on the longitudinal movement, unblocks the rotational movement of the piston pin in respect to the piston, and vice versa.

The locking system 200 comprises a blocking means 202 which selectively blocks or unblock the rotational movement of the piston pin 14 in respect to the piston 16. The blocking means 202 comprises a stem or alike 204 having a first longitudinal section 206 of circular shape and a second longitudinal section 208 at the end thereof of a shape deviating from circular form. The stem is arranged in to a hole 210 in the piston pin. There is a locking member 214 attached to the piston body which has a hole 216 of said shape deviating from circular form so that the second longitudinal section 208 may fit into the hole. Additionally the cavity in piston pin is at its edge area also of said shape deviating from circular form so that the second longitudinal section may partly fit into the cavity. When the second longitudinal section having said shape deviating from circular form is retracted partly into the piston pin its shape prevents the relative rotation of the piston and the piston pin. In this longitudinal position the at least one pin 112 of the clutch system is retracted from the cavity of the piston pin, and the gear rim is freewheeling.

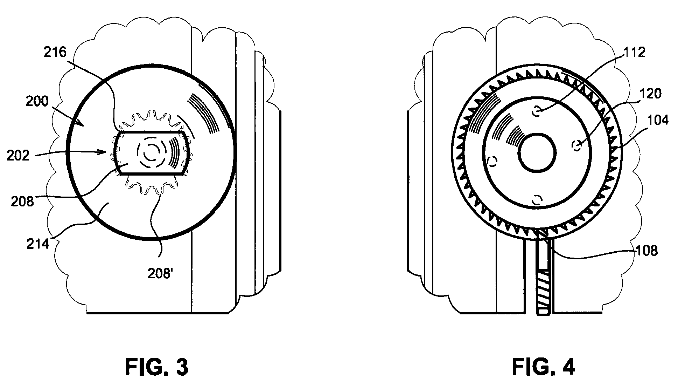

The second longitudinal section 208 of a shape deviating from circular form may actually be of be different forms 208' one of which is exemplary depicted by dotted line in the figure 3. Naturally the possible rotational positions at which the stem may be retracted into the piston pin are equal with the circular division of the pins and cavities in the clutch system. In other words according to an embodiment of the invention there may be several pins and several cavities arranged to the clutch system 106 of the assembly.

The coupling system 122 is retained at a setting which locks the position of the second central axis 14.6 in respect to the first central axis 14.4, i.e the stem 204 is at retracted position, by means of a spring assembly 124 in the clutch system 106. Respectively the stem 204 is provided with a hydraulic actuator 126, which is arranged to apply force to the coupling system 122 against the force of the spring assembly when pressurized fluid is introduced to the actuator 126.

The piston pin is normally locked in a certain position by the locking member 214 of the piston and the second longitudinal section 208 of the stem, and the ratchet is freewheeling.

When the compression ratio is to be changed hydraulic pressure is applied to the actuator 126 which urges the coupling system 122 in a directon of arrow A in the figure 2. That is a direction which unlocks the locking system 200 and couples the rotating system 100. The clutch in the coupling system is turning freely but pressed against the end of the piston pin, until it reaches a position where the pins 112 and the cavities 120 are meshing and clutches in. This connects the gear rim to the piston pin. The actuator may be for example mechanic, pneumatic or hydraulic actuator.

At the same time as the gear rim (ratchet) is clutched in, the second longitudinal section of the stem at the end thereof is pushed out of the piston pin being totally within the locking member 214 of the piston.

After the piston pin has rotated in respect to the stem 204 so that it may not be retracted back into the gugdeon pin (direction opposite the arrow A) until proper position has been reached, the actuator's pressure may be relieved. The second longitudinal section 208 turns against the end of the piston pin until its form and the form of the cavity in the piston pin are meshing. The compressed spring assembly 124 draws the stem back into the cavity locks the rotation of the piston pin in respect to the piston and simultaneously disengages the clutch system 106.

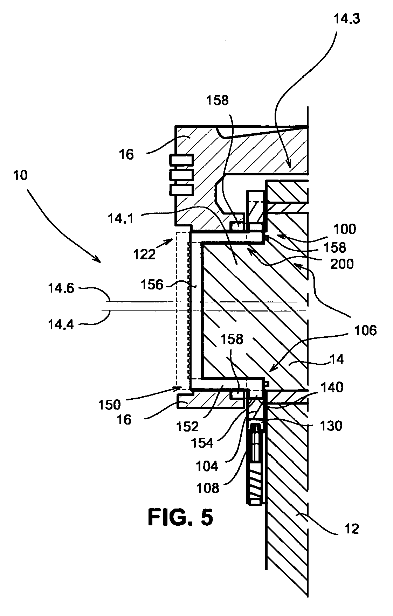

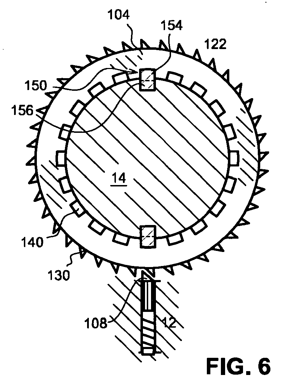

In Figures 5 and 6 there is shown a piston pin assembly according to an embodiment of the invention in which the power transmission system and the locking system are realized in an alternative manner to that shown in figure 1 and 2. In this case the rotating system is arranged inside the piston at a space between the connecting rod 12 and the piston body 16. The assembly 10 comprises a gear rim 104 arranged to circumscribe the piston pin and being selectively engageable by the clutch system 106 to the piston pin 14. The gear rim 104 is in force transmission with the connecting rod 12 by a pawl device 108 that co-operates with notches of the gear rim forming a ratchet to rotate the gear rim in first direction and prevent it from rotating backward, thus making the gear rim rotate in only one direction.

The locking system 200 and the coupling system 100 are realized in such a manner that they utilize coupling system 122, and particularly its position to engage the power transmission system to the piston pin and unlocks the rotational movement of the piston pin in respect to the piston.

The gear rim 104 is shown in the figure 6 as a front view. The gear rim 104 is provided with gear teeth 130 meshing with the pawl device at its outer rim, and notches 140 at its inner rim co-operating with a clutch system 106. The clutch system comprises a bar member 150 arranged longitudinally movably in a groove 152 arranged to the outer surface of the piston pin 14. The radial dimension of the groove is such that the bar member may fit into the groove. The bar members is fitted radially within the groove except at its end portion where the bar is provided with a radially projecting part 154 conforming with the shape of the notches 140 in the gear rim. The arrangement comprises two bar members 150 angularly equally spaced to the circumference of the piston pin and connected with each other by a cross bar 156.

The piston 16 suitable to be used in connection with the piston pin assembly comprises at least one slot 158 in the supporting surface of the piston pin, the slot conforming to the shape of the radially projecting part 154 in the bar member, when assembled there to.

In normal operation the clutch system 106 is at a longitudinal position in respect to the piston pin in which the radially projecting parts 154 are coupled to the slot 158 in the piston, which locks the position of the piston pin in respect to the piston. This position of the bar member is shown by dotted line in the figure 5. The bar member at this position now allows a freewheeling of the gear rim while the engine is cranked or operated.

In case an adjustment of compression ratio is desired the bar member is moved longitudinally in respect to the piston pin towards its center so that the radially projecting parts 154 move into the notches140 at the inner rim of the gear rim 104. Simultaneously when bar members 150 move and the radially projecting parts engage with the notches the projecting parts disengage the coupling to the lot 158 in the piston. The gear rim and the piston pin are now locked and rotating gear rim turns the piston pin in respect to the piston. When the piston pin has turned 180 degrees, the radially projecting parts 154 may return back to the position into the slots 158 in the piston locking the piston, which also disengages gear rim from the piston pin. The bar member and particularly the radially projecting part may be pushed by a spring element 158 arranged at the end of the groove against the inner surface of piston until it again reaches the slots in the piston i.e. after the piston pin has been turned 180 degrees.

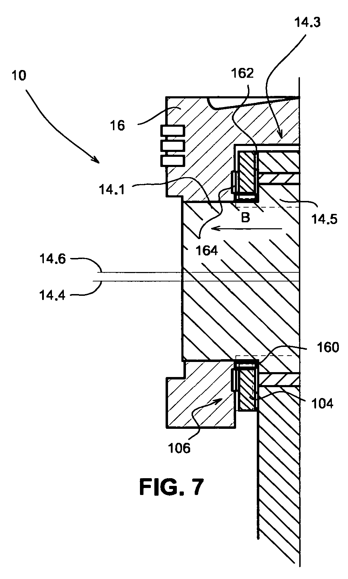

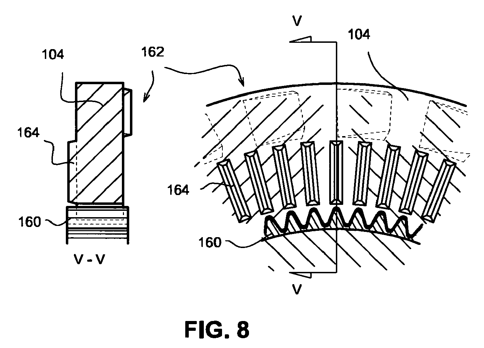

Figures 7 and 8 describe a piston pin assembly 10 according to another embodiment of the invention, which provide variable compression ratio operation for the piston engine comprising such piston pin assembly 10. The assembly, comprising a piston pin 14 is also here installed in connection with a connecting rod 12 and piston 16. The piston pin 14 has at its first end 14.1 and its second end (not shown) a first and a second affixing area for attaching the piston pin to a piston 16 and between the first and the second ends, at a center area 14.3, a third affixing area for attaching the piston pin assembly 10 to the connecting rod 12. The first and the second ends have a common first central axis 14.4. The center area 14.3 is eccentric to the first and the second ends, in other words the center area has a second central axis 14.6 which is offset at a distance from the first central axis 14.4. The offset between the first and the second axes 14.4, 14.6 may be arranged by means of an eccentric center area of the piston pin but it is clear that the invention may be modified so that the instead of whole pin, a sleeve 14.5 arranged around the pin, and belonging thereto at the center area thereof may provide corresponding effect. This is illustrated by dotted line in figure 7. Corresponding modification may be applied to other embodiments of the invention as well.

According to the embodiment the assembly 10 comprises spline surface 160 which circumscribes the piston pin at an area being between the piston and the connecting rod in one end of the piston pin. Advantageously the spline surface is formed by a sleeve attached around the piston pin. The sleeve has longitudinal i.e. axial splines around its outer surface in to which a gear rim 104 is arranged to circumscribe a spline surface 160 longitudinally movably along the splines. Thus the inner surface of the gear rim is provided with a pattern meshing with the spine surface in the piston pin and this way the gear rim is rotationally fixed to the piston pin.

The gear rim 104 is provided with driving gear 162 at its first side towards the connecting rod. Respectively the connecting rod is provided with a surface meshing with the driving gear such that the gear rim acts ratchet-like when longitudinally urged against the connecting rod to rotate the gear rim in first direction and prevent it from rotating backwards. The gear rim 104 is also provided with locking projection(s) 164 along its side opposite to the side where the driving gear is arranged i.e. opposite the connecting rod when installed. The inner surface of the piston is provided with a surface meshing with the locking projection(s) in the gear rim.

When the connecting rod rotates in first direction the form of the driving gear 162 and the meshing surface of the connecting rod engages the gear rim dir so that the gear rim rotates along with the connecting rod. When the connecting rod rotates in second direction opposite to the first direction the form of the driving gear 162 and the meshing surface of the connecting rod guides the driving gear 162 to move away (arrow B in figure 7) from the connecting rod so that the locking projection(s) engages to the respective meshing surface arranged to the inner surface of the piston locking the rotation of the gear rim while the connecting rod rotates in the second direction. Thus the gear rim is arranged to operate as the clutch system by its longitudinal positions against the connection rod having meshing surface with the driving gear, and against the inner surface of the piston having meshing surface with the locking projection(s).

While the invention has been described herein by means of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

## Claims

1. Piston pin assembly for an internal combustion piston engine, which piston pin assembly comprises a piston pin having at its first end (14.1) and its second end (14.2) a first and a second affixing area for attaching the piston pin to a piston and between the first and the second ends, at a center area (14.3), a third area for attaching the piston pin (14) to a connecting rod (12), and in which piston pin the first and the second ends having a common first central axis and the center area having a second central axis which axes are offset at a distance from each other, the assembly further comprises: a power transmission system (102) in connection with the piston pin (14) selectively engageable by a clutch system (106) to a connecting rod to receive work from rotational movement of the connecting rod in respect to a piston for rotating at least the third area (14.3) of the piston pin while installed to an engine and the engine is cranked or operated; **characterized in that** a locking system (200) selectively locks or unlocks the rotational movement of at least the third area (14.3) of the piston pin in respect to the piston.

2. Piston pin assembly according to claim 1, **characterized in that** the offset between the first and the second axes (14.4, 14.6) is arranged by means of a rotatable, eccentric sleeve (14.5) arranged around, and belonging to, the piston pin (14) at the center area thereof.

3. Piston pin assembly according to claim 1, **characterized in that** the assembly further comprises a coupling system (112) between a clutch system (106) and the locking system (200) synchronizing the operation the clutch system and the locking system so that when the clutch system engages the power transmission system to the piston pin, the locking system unlocks the rotational movement of the piston pin in respect to the piston, and vice versa.

4. Piston pin assembly according to anyone of the preceding claims 1 - 3, **characterized in that** the power transmission system (102) comprises a circular gear rim (104) at the end of the piston pin having its central axis coinciding with the first central axis, the gear rim being engageable to a connecting rod (12) to receive work from rotational movement of the connecting rod.

5. Piston pin assembly according to claim 1 - 3, **characterized in that** the power transmission system (102) comprises a circular gear rim (104) circumscribing the piston pin, the gear rim being engageable to a connecting rod to receive work from rotational movement of the connecting rod.

6. Piston pin assembly according to claim 1, **characterized in that** the assembly comprises the power transmission system (102) and the locking system (200) at the first end (14.1) of the piston pin (14).

7. Piston pin assembly according to claim 4 or 5, **characterized in that** the gear rim (104) is selectively engageable by the clutch system (106) to the piston pin, and that the gear rim is in force transmission with the connecting rod by a pawl device (108) that makes the gear rim rotate in only one direction.

8. Piston pin assembly according to claim 7, when claim 4 is applied, **characterized in that** the locking means comprises a stem (204) having a first longitudinal section of circular shape (206) and a second longitudinal section (208) of a shape deviating from circular form arranged in to a hole (201) in the piston pin (14) and a locking member (214) attached to the piston body and having a hole (216) of said shape deviating from circular form so that the second longitudinal section of the stem may fit into the hole, and that the hole in piston pin is at its edge area also of said shape deviating from circular form so that the second longitudinal section may fit into the hole.

9. Piston pin assembly according to claim 3, **characterized in that** the coupling system comprises a stem (204) mechanically connecting the power transmission system and the locking system means.

10. Piston pin assembly according to claim 5 or 6, **characterized in that** the rotating system is arranged inside the piston (16) at a space between the connecting rod (12) and the piston body.

11. Piston pin assembly according to claim 7, when claim 5 is applied, **characterized in that** gear rim (104) has an inner diameter substantially equal to the outer diameter of the piston pin (14), and provided with gear teeth (130) meshing with the pawl device at its outer rim, and notches (140) at its inner rim co-operating with the clutch (106) system, and that the clutch system comprises a bar member (150) arranged longitudinally movably in a groove (152) arranged to the outer surface of the piston pin, the bar being fitted radially within the groove except at its end portion where the bar is provided with a radially projecting part (154) conforming with the shape of the notches (140).

12. Piston pin assembly according to claim 10, **characterized in that** piston suitable to be used in connection with the piston pin assembly comprises at least one slot (158) in the supporting surface of the piston pin conforming to the shape of the radially projecting part (154), when assembled there to.

13. Piston pin assembly according to claim 12, **characterized in that** gear rim (104) is arranged longitudinally movably and rotationally fixed to the piston pin (14); and that the gear rim is provided with driving gear at its side towards the connecting rod and that the gear rim (104) is provided with locking projection(s) (164) at its side opposite to the connecting rod, and that the gear rim is arranged to operate as the clutch system by its longitudinal positions against the connecting rod (12) having meshing surface with the driving gear, and against the inner surface of the piston having meshing surface with the locking projection(s).

14. Piston pin assembly according to claim 13, **characterized in that** that the gear rim (104) is arranged longitudinally movably and rotationally fixed by means of spline surfaces (160) arranged to the piston pin and the gear rim.

## Patentansprüche

1. Kolbenbolzenbaugruppe für einen Verbrennungskolbenmotor, wobei die Kolbenbolzenbaugruppe einen Kolbenbolzen umfasst, der an seinem ersten Ende (14.1) und an seinem zweiten Ende (14.2) einen ersten und einen zweiten Befestigungsbereich zum Anbringen des Kolbenbolzens an einem Kolben und zwischen den ersten und zweiten Enden in einem mittleren Bereich (14.3) einen dritten Bereich zum Anbringen des Kolbenbolzens (14) an einer Pleuelstange (12) aufweist, und wobei in dem Kolbenbolzen die ersten und zweiten Enden eine gemeinsame erste mittlere Achse aufweisen und der mittlere Bereich eine zweite mittlere Achse aufweist, wobei die Achsen in einem Abstand voneinander versetzt sind, wobei die Baugruppe ferner Folgendes umfasst: ein Energieübertragungssystem (102) in Verbindung mit dem Kolbenbolzen (14), das selektiv von einem Kupplungssystem (106) mit einer Pleuelstange in Eingriff gebracht werden kann, um Arbeit aus der Drehbewegung der Pleuelstange im Verhältnis zu einem Kolben aufzunehmen, um mindestens den dritten Bereich (14.3) des Kolbenbolzens zu drehen, während es an einem Motor installiert ist, und der Motor gestartet oder betrieben wird;
**dadurch gekennzeichnet, dass** ein Sperrsystem (200) die Drehbewegung mindestens des dritten Bereichs (14.3) des Kolbenbolzens im Verhältnis zum Kolben selektiv sperrt oder entsperrt.

2. Kolbenbolzenbaugruppe nach Anspruch 1, **dadurch gekennzeichnet, dass** der Versatz zwischen den ersten und zweiten Achsen (14.4, 14.6) anhand eines drehbaren Exzenters (14.5) angeordnet ist, der um den Kolbenbolzen (14) herum in dem mittleren Bereich desselben angeordnet ist und zu diesem gehört.

3. Kolbenbolzenbaugruppe nach Anspruch 1, **dadurch gekennzeichnet, dass** die Baugruppe ferner ein Kopplungssystem (112) zwischen einem Kupplungssystem (106) und dem Sperrsystem (200) umfasst, das den Betrieb des Kupplungssystems und des Sperrsystems derart synchronisiert, dass wenn das Kupplungssystem das Energieübertragungssystem mit dem Kolbenbolzen in Eingriff bringt, das Sperrsystem die Drehbewegung des Kolbenbolzens im Verhältnis zum Kolben entsperrt, und umgekehrt.

4. Kolbenbolzenbaugruppe nach einem der vorhergehenden Ansprüche 1 bis 3, **dadurch gekennzeichnet, dass** das Energieübertragungssystem (102) einen kreisförmigen Zahnkranz (104) am Ende des Kolbenbolzens umfasst, dessen mittlere Achse mit der ersten mittleren Achse zusammenfällt, wobei der Zahnkranz mit einer Pleuelstange (12) in Eingriff gebracht werden kann, um Arbeit aus der Drehbewegung der Pleuelstange aufzunehmen.

5. Kolbenbolzenbaugruppe nach Anspruch 1 bis 3, **dadurch gekennzeichnet, dass** das Energieübertragungssystem (102) einen kreisförmigen Zahnkranz (104) umfasst, der den Kolbenbolzen abgrenzt, wobei der Zahnkranz mit einer Pleuelstange in Eingriff gebracht werden kann, um Arbeit aus der Drehbewegung der Pleuelstange aufzunehmen.

6. Kolbenbolzenbaugruppe nach Anspruch 1, **dadurch gekennzeichnet, dass** die Baugruppe das Energieübertragungssystem (102) und das Sperrsystem (200) am ersten Ende (14.1) des Kolbenbolzens (14) umfasst.

7. Kolbenbolzenbaugruppe nach Anspruch 4 oder 5, **dadurch gekennzeichnet, dass** der Zahnkranz (104) durch das Kupplungssystem (106) selektiv mit dem Kolbenbolzen in Eingriff gebracht werden kann, und dass der Zahnkranz mit der Pleuelstange über eine Klinkenvorrichtung (108), die bewirkt, dass sich der Zahnkranz nur in eine Richtung dreht, in Kraftübertragung steht.

8. Kolbenbolzenbaugruppe nach Anspruch 7 in Verbindung mit Anspruch 4, **dadurch gekennzeichnet, dass** das Sperrmittel einen Schaft (204), der einen ersten kreisförmigen Längsabschnitt (206) und einen zweiten Längsabschnitt (208) mit einer Form, die von einer Kreisform abweicht, aufweist, der in einem Loch (201) in dem Kolbenbolzen (14) angeordnet ist, und ein Sperrelement (214), das an dem Kolbengehäuse angebracht ist und ein Loch (216) mit der Form, die von einer Kreisform abweicht, aufweist, so dass der zweite Längsabschnitt des Schafts in das Loch passen kann, und dass das Loch in dem Kolbenbolzen an seinem Randbereich ebenfalls eine Form aufweist, die von der Kreisform abweicht, so dass der zweite Längsabschnitt in das Loch passen kann, umfasst.

9. Kolbenbolzenbaugruppe nach Anspruch 3, **dadurch gekennzeichnet, dass** das Kopplungssystem einen Schaft (204) umfasst, der das Energieübertragungssystem und das Sperrsystemmittel mechanisch verbindet.

10. Kolbenbolzenbaugruppe nach Anspruch 5 oder 6, **dadurch gekennzeichnet, dass** das Drehsystem im Innern des Kolbens (16) in einem Raum zwischen der Pleuelstange (12) und dem Kolbengehäuse angeordnet ist.

11. Kolbenbolzenbaugruppe nach Anspruch 7 in Verbindung mit Anspruch 5, **dadurch gekennzeichnet, dass** der Zahnkranz (104) einen Innendurchmesser aufweist, der im Wesentlichen gleich dem Außendurchmesser des Kolbenbolzens (14) ist und mit einer Verzahnung (130), die mit der Klinkenvorrichtung an ihrem Außenkranz kämmt, und Kerben (140) an seinem Innenkranz, die mit dem Kupplungssystem (106) zusammenwirken, versehen ist, und dass das Kupplungssystem ein Stangenelement (150) umfasst, das in Längsrichtung in einer Nut (152) bewegbar ist, die an der Außenfläche des Kolbenbolzens angeordnet ist, wobei die Stange außer an ihrem Endteil, wo die Stange mit einem radial vorstehenden Teil (154) versehen ist, das an die Form der Kerben (140) angepasst ist, radial in die Nut eingepasst ist.

12. Kolbenbolzenbaugruppe nach Anspruch 10, **dadurch gekennzeichnet, dass** der Kolben geeignet ist, um in Verbindung mit der Kolbenbolzenbaugruppe verwendet zu werden, die mindestens einen Schlitz (158) in der Tragfläche des Kolbenbolzens umfasst, der an die Form des radial vorstehenden Teils (154) angepasst ist, wenn er damit zusammengebaut ist.

13. Kolbenbolzenbaugruppe nach Anspruch 12, **dadurch gekennzeichnet, dass** der Zahnkranz (104) in Längsrichtung bewegbar und drehfest an dem Kolbenbolzen (14) angeordnet ist; und dass der Zahnkranz mit einem Antriebsrad auf seiner Seite in Richtung auf die Pleuelstange versehen ist, und dass der Zahnkranz (104) mit einem oder mehreren Sperrvorsprüngen (164) auf seiner Seite gegenüber der Pleuelstange versehen ist, und dass der Zahnkranz angeordnet ist, um als Kupplungssystem über seine Längspositionen gegen die Pleuelstange (12) zu funktionieren, die eine Kämmfläche mit dem Antriebsrad aufweist, und gegen die Innenfläche des Kolbens, die eine Kämmfläche mit dem oder den Sperrvorsprüngen aufweist.

14. Kolbenbolzenbaugruppe nach Anspruch 13, **dadurch gekennzeichnet, dass** der Zahnkranz (104) anhand von Keilflächen (160), die an dem Kolbenbolzen und dem Zahnkranz angeordnet sind, in Längsrichtung bewegbar und drehfest angeordnet ist.

## Revendications

1. Ensemble d'axe de piston pour un moteur à combustion interne à piston, lequel ensemble d'axe de piston comprend un axe de piston ayant à sa première extrémité (14.1) et à sa seconde extrémité (14.2) une première et une seconde zone de fixation pour rattacher l'axe de piston à un piston et entre la première et la seconde extrémité, au niveau d'une zone centrale (14.3), une troisième zone pour rattacher l'axe de piston (14) à une tige de raccordement (12) et dans lequel axe de piston la première et la seconde extrémité ont un premier axe central commun et la zone centrale a un second axe central, lesquels axes sont décalés à une distance l'un de l'autre, l'ensemble comprend en outre : un système de transmission d'énergie électrique (102) en connexion avec l'axe de piston (14) étant mis en prise sélectivement par un système d'embrayage (106) avec une tige de raccordement pour recevoir la puissance du mouvement rotatif de la tige de raccordement par rapport à un piston pour tourner au moins la troisième zone (14.3) de l'axe de piston lors de l'installation sur un moteur et lorsque le moteur est démarré ou fonctionne ; **caractérisé en ce que** un système de verrouillage (200) verrouille ou déverrouille sélectivement le mouvement rotatif d'au moins la troisième zone (14.3) de l'axe de piston par rapport au piston.

2. Ensemble d'axe de piston selon la revendication 1, **caractérisé en ce que** le décalage entre le premier et le second axes (14.4, 14.6) est agencé au moyen d'un manchon excentrique rotatif (14.5) disposé autour, et appartenant à l'axe de piston (14) au niveau de la zone centrale de ce dernier.

3. Ensemble d'axe de piston selon la revendication 1, **caractérisé en ce que** l'ensemble comprend en outre un système de couplage (112) entre un système d'embrayage (106) et le système de verrouillage (200) synchronisant le fonctionnement du système d'embrayage et du système de verrouillage de sorte que lorsque le système d'embrayage met en prise le système de transmission d'énergie électrique avec l'axe de piston, le système de verrouillage déverrouille le mouvement rotatif de l'axe de piston par rapport au piston, et vice versa.

4. Ensemble d'axe de piston selon une quelconque des revendications précédentes 1-3, **caractérisé en ce que** le système de transmission d'énergie électrique (102) comprend une couronne dentée circulaire (104) à l'extrémité de l'axe de piston dont l'axe central coïncide avec le premier axe central, la couronne dentée venant en prise avec une tige de raccordement (12) afin de recevoir la puissance du mouvement rotatif de la tige de raccordement.

5. Ensemble d'axe de piston selon la revendication 1-3, **caractérisé en ce que** le système de transmission d'énergie électrique (102) comprend une couronne dentée circulaire (104) faisant le tour de l'axe de piston, la couronne dentée venant en prise avec une tige de raccordement afin de recevoir la puissance du mouvement rotatif de la tige de raccordement.

6. Ensemble d'axe de piston selon la revendication 1, **caractérisé en ce que** l'ensemble comprend le système de transmission d'énergie électrique (102) et le système de verrouillage (200) à la première extrémité (14.1) de l' axe de piston (14).

7. Ensemble d'axe de piston selon la revendication 4 ou 5, **caractérisé en ce que** la couronne dentée (104) est mis en prise sélectivement par le système d'embrayage (106) avec l'axe de piston, et **en ce que** la couronne dentée est en transmission de force avec la tige de raccordement par un dispositif de cliquet (108) qui fait tourner la couronne dentée dans seulement une direction.

8. Ensemble d'axe de piston selon la revendication 7, quand la revendication 4 s'applique, **caractérisé en ce que** le moyen de verrouillage comprend une tige (204) ayant une première section longitudinale de forme circulaire (206) et une seconde section longitudinale (208) d'une force s'écartant de la forme circulaire disposée dans un trou (201) dans l'axe de piston (14) et un élément de verrouillage (214) fixé au corps de piston et ayant un trou (216) de ladite forme s'écartant de la forme circulaire de sorte que la seconde section longitudinale de la tige puisse s'insérer dans le trou, et que le trou dans l'axe de piston soit au niveau de sa zone de bord également de ladite forme s'écartant de la forme circulaire de sorte que la seconde section longitudinale puisse s'insérer dans le trou.

9. Ensemble d'axe de piston selon la revendication 3, **caractérisé en ce que** le système de couplage comprend une tige (204) raccordant mécaniquement le système de transmission d'énergie électrique et les moyens de système de verrouillage.

10. Ensemble d'axe de piston selon la revendication 5 ou 6, **caractérisé en ce que** le système rotatif est disposé à l'intérieur du piston (16) à un espace entre la tige de raccordement (12) et le corps de piston.

11. Ensemble d'axe de piston selon la revendication 7, quand la revendication 5 s'applique, **caractérisé en ce que** la couronne dentée (104) a un diamètre intérieur substantiellement égal au diamètre extérieur de l'axe de piston (14) et pourvu de dents d'engrenage (130) s'engrenant avec le dispositif de cliquet au niveau de sa couronne extérieure, et des encoches (140) au niveau de sa couronne intérieure coopérant avec le système d'embrayage (106), et que le système d'embrayage comprend un élément de barre (150) disposé longitudinalement de manière amovible dans une rainure (152) ménagée sur la surface extérieure de l'axe de piston, la barre étant insérée radialement à l'intérieur de la rainure à l'exception de sa portion d'extrémité où la barre est pourvue d'une partie radialement protubérante (154) se conformant à la forme des encoches (140).

12. Ensemble d'axe de piston selon la revendication 10, **caractérisé en ce que** le piston adéquat pour une utilisation en liaison avec l'ensemble d'axe de piston comprend au moins une fente (158) dans la surface de support de l'axe de piston se conformant à la forme de la partie radialement protubérante (154) lors de l'assemblage à celle-ci.

13. Ensemble d'axe de piston selon la revendication 12, **caractérisé en ce que** une couronne dentée (104) est disposée de manière mobile longitudinalement et fixe rotativement à l'axe de piston (14) ; et que la couronne dentée est pourvue d'un engrenage d'entraînement au niveau de son côté tourné vers la tige de raccordement et que la couronne dentée (104) est pourvue de protubérance(s) de verrouillage (164) au niveau de son côté opposé à la tige de raccordement, et que la couronne dentée est disposée afin de fonctionner comme le système d'embrayage par ses positions longitudinales contre la tige de raccordement (12) ayant une surface d'engrènement avec l'engrenage d'entrainement, et contre la surface intérieure du piston ayant une surface d'engrènement avec la (les) protubérance(s) de verrouillage.

14. Ensemble d'axe de piston selon la revendication 13, **caractérisé en ce que** la couronne dentée (104) est disposée de manière mobile longitudinalement et fixe rotativement à au moyen de surfaces de cannelure (160) disposées sur l'axe de piston et la couronne dentée.
